# EUROPÄISCHE PATENTSCHRIFT

(11) **EP 1 421 559 B1**
(45) Veröffentlichungstag und Bekanntmachung des Hinweises auf die Patenterteilung: **15.03.2006**
(21) Anmeldenummer: 02772209.9
(22) Anmeldetag: 26.08.2002
(51) Int. Cl.: G06T 7/00

(54) **VORRICHTUNG UND VERFAHREN ZUM AUSWERTEN EINER BESCHAFFENHEIT EINES OBJEKTS**
DEVICE AND METHOD FOR EVALUATING A CHARACTERISTIC OF AN OBJECT
DISPOSITIF ET PROCEDE PERMETTANT D'EVALUER LA QUALITE D'UN OBJET

(30) Priorität: 27.08.2001 DE 10141807
(43) Veröffentlichungstag der Anmeldung: 26.05.2004
(73) Patentinhaber: Fraunhofer-Gesellschaft zur Förderung der angewandten Forschung e.V., 80636 München (DE)
(72) Erfinder: HASSLER, Ulf, 91560 Heilbronn (DE); OECKL, Steven, 91052 Erlangen (DE); WENZEL, Thomas, 91083 Baiersdorf (DE); HANKE, Randolf, 90617 Puschendorf (DE); KOSTKA, Günther, 91056 Erlangen (DE)
(74) Vertreter: Zinkler, Franz
(86) Internationale Anmeldenummer: PCT/EP2002/009519
(87) Internationale Veröffentlichungsnummer: WO 2003/019180

(56) Entgegenhaltungen:
- WO-A-01/54065
- US-A- 5 056 146
- US-A- 5 881 124
- S. OEKL, U. HASSLER, T. WENZEL, R. HANKE: "Automatische Auswertung von 3D-CT Daten ohne CAD-Information" DGZFP-JAHRESTAGUNG 2001: ZFP IN ANWENDUNG, ENTWICKLUNG UND FORSCHUNG - BERICHTSBAND 75-CD, 21. - 23. Mai 2001, XP009012966 Berlin
- U. HASSLER, S. OEKL : "Automatische Porenfindung in 3D-Volumendaten" IN: LEITFADEN ZU ALGORITHMEN UND VERFAHREN DER BILDVERARBEITUNG (HRSG. FRAUNHOFER-ALLIANZ VISION), Mai 2001 (2001-05), Seiten 28-29, XP009012964
- MERY D ET AL: "VERFOLGUNG VON GUSSFEHLERN IN EINER DIGITALEN ROENTGENBILDSEQUENZ: EINE NEUE METHODE ZUR AUTOMATISIERUNG DER QUALITAETSKONTROLLE VON GUSSTEILEN FLAW TRACKING IN A SEQUENCE OF DIGITAL X-RAY IMAGES: A NEW METHOD OF AUTOMATED QUALITY CONTROL OF CASTINGS" TECHNISCHES MESSEN TM, R.OLDENBOURG VERLAG. MUNCHEN, DE, Bd. 67, Nr. 4, April 2000 (2000-04), Seiten 160-165, XP000966288 ISSN: 0171-8096

## Beschreibung

Die vorliegende Erfindung bezieht sich auf die Materialprüfung und insbesondere auf die zerstörungsfreie Auswertung einer Beschaffenheit eines Objekts.

Das technische Anwendungsgebiet des hier beschriebenen Verfahrens ist die industrielle Qualitätskontrolle an Produkten, deren räumliche Dichteverteilung mittels Methoden der 3D - Tomographie (Röntgen- oder Magnetresonanz-) bzw. anderen Verfahren digital dargestellt werden kann. Die Kontrolle erfolgt hinsichtlich der Überprüfung auf Fabrikationsfehler, die sich als Porosität, Riß, allg. als Abweichung von einem vorgegebenen Dichte- bzw. Materialwert abzeichnen. Als einer der wichtigsten Anwendungsfälle sei die Detektion von Porositäten in Aluminiumgußteilen genannt. Die besondere Schwierigkeit bei der Detektion solcher Fehlermerkmale liegt darin, daß in den zu prüfenden Objekten in der Regel gleichzeitig andere konstruktive Merkmale eingebracht sind, deren Ausdehnung in der gleichen Größenordnung liegen kann wie die Fehlerstruktur bzw. die zu detektierenden Fehler. Dies hat zur Folge, daß einfache Schwellwertentscheidungen zu keiner eindeutigen Unterscheidung zwischen Fehler und konstruktivem Merkmal führen.

Bei der Produktion von Bauteilen, z. B. aus Aluminium/Magnesium/Stahl/Keramik oder Kunststoffen, kann es zu Herstellungsfehlern beim inneren Aufbau kommen, die die mechanischen Eigenschaften und dadurch das Stabilitätsverhalten signifikant beeinflussen. Eine Aussonderung solcher Produkte ist notwendig. Derartige Fehler können z. B. an materialströmungsmechanisch ungünstigen Positionen auftreten und äußern sich in der Regel durch lokal begrenzte Dichteunterschiede/-gradienten gegenüber der ungestörten fehlerfreien Verteilung. Die räumliche Ausdehnung solcher Defektstrukturen kann vergleichbar sein mit der der gleichzeitig vorhandenen konstruktiven Strukturen innerhalb des Prüfobjektes, wie z. B. Bohrungen, Kanäle, Gewinde oder Schrift/Markierungsreliefs. Vor allem in der Prototypphase, d. h. bei der Optimierung des Herstellungsprozesses, ist eine schnelle und zuverlässige Darstellung solcher inneren Defekte unabdingbar.

Bisher werden für diese Prüfaufgabe im industriellen Bereich meist entweder zerstörende oder 2D-Radioskopie-Verfahren eingesetzt, die jedoch aufgrund der im folgenden genannten Gründe nur eine unbefriedigende Prüftiefe leisten können.

### Zerstörende Verfahren:

Die Prüfobjekte werden zersägt oder Material wird schichtweise abgetragen, um interessierende Objektstrukturen freizulegen. Diese Strukturen können dann mittels optischer Methoden, z. B. Mikroskopie, vermessen werden. Neben dem erforderlichen (Zeit-) Aufwand ist bei diesen Methoden nachteilhaft, daß die Objekte nach der Prüfung nicht mehr intakt existieren, wodurch andere Prüfmethoden, etwa Belastungstests, nicht mehr durchgeführt werden können. Jedoch gerade die Zuordnung von Defektgröße zu gerade noch tolerierbarer Belastung ergäbe wesentliche Aussagen über die Produkteigenschaften.

### 2D - Radioskopie:

Die Röntgendurchstrahlungsprüfung (Radioskopie) ist ein vielseitiges Instrument in der zerstörungsfreien Materialprüfung, und wird standardmäßig in vielen Bereichen, z. B. bei der automatischen Leichtmetallräderprüfung eingesetzt. Wesentlicher Nachteil dieses Verfahrens ist jedoch der Verlust der Tiefeninformation, der bei der Projektion dreidimensionaler Objekte auf eine zweidimensionale Detektorfläche entsteht. Durch die Überlagerung aller Objektstrukturen auf eine einzige Ebene wird nicht nur eine Auffindung etwaiger Defekte erschwert (bzw. unmöglich), sondern auch deren genaue Lokalisierung und Vermessung ist nur in den seltensten Fällen möglich.

### 3D - CT - manuell/visuell:

In den letzten Jahren hielt die Röntgencomputertomographie (CT) Einzug in die Entwicklungslabors der Industrie. Diese Technik ermöglicht durch die Aufnahme einer Vielzahl von Projektionen des Prüfobjektes aus unterschiedlichen Richtungen eine digitale Rekonstruktion der räumlichen Dichteverteilung des Prüflings. Mit Hilfe geeigneter Visualisierungsoftware ist es für das Prüfpersonal möglich, beliebige virtuelle Schnitte in das Objektvolumen zu legen, und damit innenliegende Strukturen des Objektes, konstruktive wie fehlerbehaftete, zu vermessen. Dies geschieht interaktiv mittels der Visualisierungstools, die Beurteilung erfolgt visuell oder mit entsprechenden Vermessungsfunktionen. Dieser Vorgang gestaltet sich meist sehr zeitaufwendig, da die Objektvolumina (typischerweise 100 MB bis 4 GB an Datenvolumen) manuell Schicht für Schicht dargestellt und visuell auf lokale Dichteschwankungen hin untersucht werden müssen. Dies ist besonders im Hinblick auf die neuesten Entwicklungen im Bereich der 3D-CT zu beachten. Vermehrt kommen dort hochoptimierte 3D-Verfahren zum Einsatz, mit denen die Aufnahme und Rekonstruktion von Objektvolumina innerhalb weniger Minuten (3-5 Minuten) möglich ist. Bis vor ca. zwei Jahren lagen solche Meßvorgänge im Stundenbereich. Hier entsteht das Problem, daß die manuelle (visuelle) Auswertung zeitlich mit dem Messungs-/Rekonstruktionsvorgang im allgemeinen nicht schritthalten kann.

### 3D-CT-Abgleich mit CAD-Daten:

Neuere Entwicklungen in der Materialprüfung mittels CT zielen auf einen Vergleich der rekonstruierten Objektvolumina mit einem vorliegenden CAD-Modell des Prüflings, wodurch nicht nur innenliegende Defekte wie Porositäten, Lunker usw. detektiert werden können, sondern auch eine Überprüfung der Maßhaltigkeit von z. B. Wandstärken, Bohrungen usw. möglich ist. Dazu wird in einem ersten Schritt aus dem rekonstruierten Objektvolumen ein Facettenmodell generiert, das im wesentlichen die Oberflächenkontur des Prüflings darstellt. In einem zweiten Schritt wird die Transformationsmatrix zwischen Facettenmodell und CAD-Modell berechnet (Registrierung). Dazu bedient man sich gewöhnlich einiger ausgewählter (bzw. speziell dafür angebrachter) markanter Strukturen des Objektes. Dritter und letzter Schritt ist die Berechnung der Abweichungen des Facettenmodells vom CAD-Modell.

Obwohl ein Prüfobjekt mit dieser Technik theoretisch exakt vermessen werden kann, existieren einige Nachteile: a) Bis jetzt existiert noch keine durchgängige Prozeßkette, die eine automatisierte Vermessung ohne intensive Interaktion mit dem Prüfpersonal erlaubt. b) Probleme bestehen hauptsächlich in der exakten Extraktion der Bauteiloberfläche und in der nachfolgenden Registrierung. c) Die Berechnung des Facettenmodells und der Registrierung ist extrem speicher- und rechenzeitaufwendig. d) Letzter und vielleicht wesentlicher Nachteil ist die Tatsache, daß das CAD-Modell das fertige Produkt beschreibt, aus der Gießerei jedoch ein Rohling kommt, der an vielen Stellen Materialzugaben enthält, die erst in weiteren Prozeßschritten entfernt werden. Durch diesen Sachverhalt wird der Vorgang der Registrierung erheblich erschwert. Eine Prüfung auf Materialinnenfehler direkt nach dem Gießprozeß dürfte sich deshalb mit dieser Technik als schwierig erweisen, was zu Zeitverlusten und u. U. zu einigen vergeblich durchgeführten Bearbeitungsschritten führt.

Zusammenfassend sind die bekannten Verfahren somit dahingehend nachteilig, daß insbesondere dann, wenn ein Referenzobjekt bereitgestellt wird, die zu verarbeitenden Datenmengen derart immens sind, daß dieses Verfahren für eine automatisierte Umgebung nicht praktikabel ist, was insbesondere noch dadurch verschärft wird, wenn, wie es ausgeführt worden ist, Rohlinge untersucht werden sollen, für die es nicht einmal ein spezielles CAD-Modell gibt, da dieses nur für das fertige Endprodukt existiert. Gerade die Qualitätskontrolle nach jedem Herstellungsschritt, d. h. mit dem Rohling, und nicht mit dem fertigen Endprodukt, ist besonders von Interesse, da, wenn ein Rohling bereits ausgesondert werden kann, keine unnötigen Verarbeitungsschritte in ein von vorneherein fehlerhaftes Produkt investiert werden müssen. Bereits eine frühe Qualitätskontrolle und Auslese von Fehlern ist zur Kostenreduzierung entscheidend.

Die WO 01/54065 A1 offenbart ein Verfahren, System und Computer-lesbares Medium für die zweidimensionale und dreidimensionale Erfassung von Lungenknoten unter Verwendung von computerisierten Tomographie-Scans. Aus einer dreidimensionalen CT-Aufnahme des Thorax wird zunächst die Lunge selbst identifiziert und extrahiert. Die segmentierten Lungenregionen für alle Schnitte bei einem CT-Scan bilden ein vollständiges segmentiertes Lungenvolumen, das einer nachfolgenden Analyse unterzogen wird. Hierauf wird das noch von Artefakten befreite segmentierte Lungenvolumen derart verarbeitet, daß 36 Schwellwert-Lungenvolumen erzeugt werden. Hierzu wird eine Graustufenaufzeichnung des vollständigen segmentierten Lungenvolumens einer Schwellwertentscheidung mit jeweils 36 unterschiedlichen Schwellwerten unterzogen. Für jedes Schwellwert-Lungenvolumen wird dann ein dreidimensionales 18-Punkt-Verbindungsschema durchgeführt, um für jedes Pixel des vollständigen segmentierten Lungenvolumens zu untersuchen, ob es zu einem Volumen gehört oder nicht. Hierbei wird für jedes Pixel untersucht, ob die 18 benachbarten Pixel denselben Wert haben. Wird diese Frage bejaht, so wird das Pixel dem Volumen zugehörig bezeichnet. Einige der benachbarten Pixel liegen in dem bezüglich des untersuchten Pixels darüberliegenden CT-Schnitt oder dem darunter liegenden CT-Schnitt. Damit können einzelne Strukturen innerhalb von allen 36 Schwellwert-Volumen identifiziert werden. Das geometrische Volumen jeder einzelnen Struktur wird dann durch Multiplizieren der Anzahl von Pixeln, die innerhalb der Struktur erhalten sind, mit einem bekannten Volumenelement (Voxel) berechnet. Lungenknoten haben ein maximales oberes Volumen.

Das U.S.-Patent Nr. 5,838,815 und das U.S.-Patent Nr. 5, 627, 907 offenbaren ein Verfahren zum Erfassen einer abnormalen Region in einem lebenden Gewebe, das durch eine digitale Radiographie dargestellt ist, wobei zunächst eine verdächtige abnormale Region in der Radiographie identifiziert wird, um dann mehrere topographische Schichten der verdächtigen abnormalen Region aus der digitalen Radiographie zu extrahieren, wobei die mehren topographischen Schichten aus derselben Radiographie extrahiert werden. Hierauf werden Merkmale der Region jeder der Schichten bestimmt, um schließlich ein sich über die topographischen Schichten erstreckendes Kriterium auf die Merkmale anzuwenden, um festzustellen, ob die verdächtige abnormale Region tatsächlich eine abnormale Region ist.

Das U.S.-Patent Nr. 4,985,834 offenbart ein Verfahren zum Erzeugen von perspektivischen zweidimensionalen Bildern aus einer dreidimensionalen Darstellung.

Die EP 0 875 751 A1 offenbart ein dreidimensionales Computertomographieverfahren zum Untersuchen und Vergleichen einer aktuellen Geometrie mit einer vorbestimmten Geometrie eines Objekts. Hierzu wird das Objekt dreidimensional abgetastet, um mehrere Scheiben von tatsächlichen Geometriedaten des Objekts zu erhalten. Dann werden die mehreren Scheiben in tatsächliche Grenzdaten verarbeitet, die innere und äußere Grenzen des Objekts definieren. Schließlich werden tatsächliche Punktwolkendaten aus den tatsächlichen Grenzdaten erzeugt. Ferner werden die tatsächlichen Punktwolkendaten mit vorbestimmten Objektgeometriedaten verglichen, wobei ein Bild erzeugt wird, das die Nicht-Übereinstimmung zwischen den Punktwolkendaten und den vorbestimmten Daten wiedergibt.

Die Fachveröffentlichung von U. Hassler, S. Oekl: "Automatische Porenfindung in 3D-Volumendaten", in: "Leitfaden zu Algorithmen und Verfahren der Bildverarbeitung (Hrsg. Frauenhofer-Allianz Vision) Mai 2001, Seiten 28 bis 29, offenbart ein Konzept zur zerstörungsfreien Materialprüfung, bei dem im Inneren eines Prüfobjekts befindliche Strukturen sichtbar gemacht und im Raum lokalisiert werden. Grundlage für eine Auswertung von 3-D-CD-Daten bildet eine Auswertungsstrategie, die schichtweise auf ein gemessenes Objektvolumen angewendet wird. Die Überprüfung jedes einzelnen 2-D-Schichtbildes erfolgt in mehreren Schritten. Zunächst wird ein sog. Objekt-Labeling durchgeführt, d.h. es werden diejenigen Bildbereiche markiert, die zum Objekt gehören. Dies wird durch ein an die Volumendaten angepasstes Segmentierungsverfahren realisiert. Bei der darauffolgenden Suche nach Poren werden nur noch die gelabelten Regionen verwendet, und es werden eventuelle im Bildhintergrundliegende fehlerähnliche Strukturen von vorneherein als nicht relevant ausgeschlossen. Anschließend wird im Bild nach Fehlern bzw. Poren gesucht. Mit geeigneten Filtern wird eine Schicht auf lokale Grauwertstörungen innerhalb des gelabelten Objektbereichs hin untersucht. Dann wird die Geometrie des Prüfobjekts genauer spezifiziert, um eventuell auftretende Pseudofehler an bekannten Strukturen des Prüfwegs zu eleminieren. Insbesondere werden in der Menge von gefundenen Grauwertstörungen diejenigen gelöscht, die sich als Ecke oder Kante im Objekt herausstellen. Nachdem die Auswertung die gesamten Volumendaten durchlaufen hat, liegen schichtweise die Informationen über Hintergrund und Objekt und insbesondere über die Defekte im Objekt vor. Hieraus wird dann eine komplette dreidimensionale Charakterisierung des Prüflings generiert, indem zusammenhängende Strukturen durch die einzelnen Schichten verfolgt und miteinander verknüpft werden. Mit Hilfe dieser Beschreibung kann dann anhand geeigneter Prüfkriterien eine Aussage über die Qualität des Gußteils gemacht werden.

Die Aufgabe der vorliegenden Erfindung besteht darin, ein Konzept zum Auswerten einer Beschaffenheit eines Objekts zu schaffen, das sicher und ökonomisch arbeitet.

Diese Aufgabe wird durch eine Vorrichtung zum Auswerten einer Beschaffenheit eines Objekts gemäß Patentanspruch 1 oder durch ein Verfahren zum Auswerten einer Beschaffenheit eines Objekts gemäß Patentanspruch 15 gelöst.

Der vorliegenden Erfindung liegt die Erkenntnis zugrunde, daß eine dreidimensionale Auswertung der Beschaffenheit eines Objekts dadurch erreicht werden kann, daß, ausgehend von einer dreidimensionalen Darstellung des Objekts zunächst die dreidimensionale Darstellung in Teilbereiche untergliedert wird, woraufhin, für jeden Teilbereich, eine eigene zweidimensionale Analyse hinsichtlich der zu untersuchenden Beschaffenheit des Objekts, z. B. der Dichte des Objekts, durchgeführt wird. Die zweidimensionale Analyse der Teilbereiche, die vorzugsweise Schichten der dreidimensionalen Darstellung sind, liefert für jeden Teilbereich Angaben über Beschaffenheits-Inhomogenitäten. Mittels einer dreidimensionalen Zusammenhangsanalyse über die Ergebnisse aus den einzelnen Schichten kann dann ein Bereich des Objekts dreidimensional erfaßt werden, indem die Beschaffenheit des Objekts von einer vorgegebenen Beschaffenheit abweicht.

Der Vorteil der vorliegenden Erfindung besteht darin, daß keine Referenzdaten wie in der Referenz-CAD-Analyse benötigt werden, sondern daß allein aufgrund der dreidimensionalen Darstellung des zu untersuchenden Objekts Beschaffenheitsabweichungen festgestellt werden können. Ein weiterer Vorteil der vorliegenden Erfindung besteht darin, daß durch teilbereichsweises Durchführen einer zweidimensionalen Analyse leistungskräftige Bildverarbeitungsalgorithmen eingesetzt werden können, um Abweichungen von einer vorgegebenen Beschaffenheit zweidimensional zu erkennen.

Ein weiterer Vorteil der vorliegenden Erfindung besteht darin, daß die erfindungsgemäße Zusammenhangsanalyse nicht mehr über die gesamten Bilddaten durchgeführt werden müssen, sondern lediglich noch über Daten, die bei der zweidimensionalen teilbereichsweisen Analyse als Abweichungen markiert worden sind.

Die dreidimensionale Zusammenhangsanalyse hat ferner den Vorteil, daß Ergebnisdaten der einzelnen Schichten bzw. Teilbereiche in Verbindung gebracht werden. Während ein Artefakt, d. h. ein in einer zweidimensionalen Schicht markierter Wert für eine abweichende Beschaffenheit, obwohl das Objekt an dieser Stelle keine abweichende Beschaffenheit hat, aufgrund einer zweidimensionalen Analyse allein nicht erkennbar ist, wird aufgrund der dreidimensionalen Zusammenhangsanalyse dieser Artefakt gewissermaßen automatisch herausgefiltert. Bei ausreichend feiner Schichtenaufgliederung wird ein Artefakt erkannt, wenn er in der darüberliegenden und/oder darunterliegenden Schicht an gleicher geometrischer Position keinen entsprechend markierten Bereich hat. Wenn daher die Schichteneinteilung ausreichend fein gemacht wird, und zwar so fein, daß Materialstörungen, die kleiner als die Höhe einer Schicht sind, nicht detektiert werden sollen, ermöglicht die Zusammenhangsanalyse alleine bereits eine robuste Artefaktausfilterung, was insbesondere von großer Bedeutung ist, wenn keine Referenz-CAD-Daten zur Verfügung sind. Aussagen über die Beschaffenheit des Objekts müssen allein auf der Basis der vorhandenen dreidimensionalen Darstellung des Objekts und ggf. Hilfsdaten über vorgegebene Beschaffenheiten etc. erhalten werden.

Ein weiteres günstiges Merkmal der Zusammenhangsanalyse, und insbesondere der dreidimensionalen Charakterisierung von Bereichen mit abweichender Beschaffenheit besteht darin, daß beliebige Attribute einer Abweichung berechnet werden können, mit Hilfe derer Abweichungen von einer vorgegebenen Beschaffenheit dahingehend klassifiziert werden können, ob sie konstruktiv sind, d. h. Bohrungen oder innere Hohlräume mit bestimmter Struktur sind, oder ob sie fehlerhafte Bereiche sind, d. h. Lufteinschlüsse, Porositäten oder Bereiche, in denen beispielsweise eine geringere Materialdichte als spezifiziert vorliegt.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild einer erfindungsgemäßen Vorrichtung zum Auswerten einer Beschaffenheit eines Objekts;
- Fig. 2: eine schematische Darstellung einer dreidimensionalen Darstellung eines Objekts zur Verdeutlichung der Untergliederung in einer Richtung;
- Fig. 3: eine schematische Darstellung einer dreidimensionalen Darstellung des Objekts zur Verdeutlichung einer Untergliederung in drei Richtungen;
- Fig. 4: eine detailliertere Darstellung der Funktionalität der Einrichtung zum zweidimensionalen Auswerten der Teilbereiche;
- Fig. 5: eine Flußdiagrammdarstellung des erfindungsgemäßen Verfahrens gemäß einem bevorzugten Ausführungsbeispiel; und
- Fig. 6: eine Flußdiagrammdarstellung des erfindungsgemäßen Konzepts gemäß einem weiteren bevorzugten Ausführungsbeispiel mit Untergliederung in den drei Achsenrichtungen.

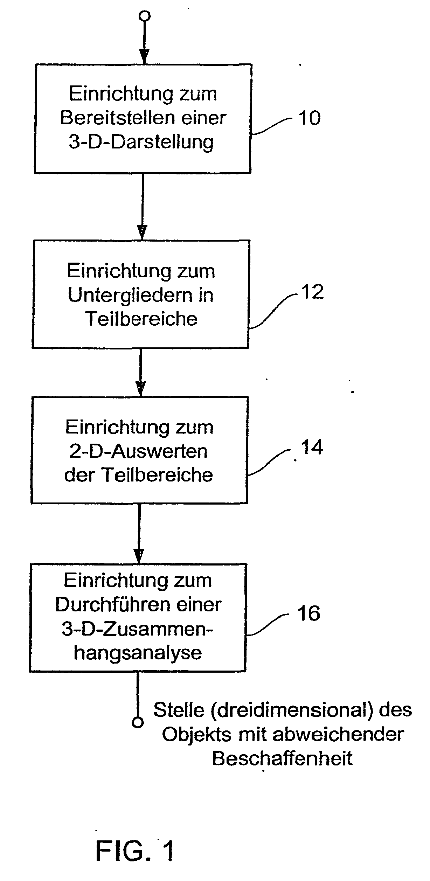

Fig. 1 zeigt ein Blockdiagramm einer erfindungsgemäßen Vorrichtung zum Auswerten einer Beschaffenheit eines Objekts. Die bevorzugte Beschaffenheit des Objekts, die untersucht werden soll, ist die Dichte des Objekts. Mit dem erfindungsgemäßen Verfahren können jedoch beliebige andere Beschaffenheiten, wie z. B. Materialparameter etc. erfaßt werden, solange Informationen über solche Beschaffenheiten einer dreidimensionalen Darstellung des Objekts entnommen werden können. Die erfindungsgemäße Vorrichtung, wie sie in Fig. 1 gezeigt ist, umfaßt zunächst eine Einrichtung 10 zum Bereitstellen einer dreidimensionalen Darstellung des Objekts, aus der Beschaffenheitsinformationen über das Objekt entnommen werden können. Die dreidimensionale Darstellung wird einer Einrichtung 12 zum Untergliedern des Objekts in Teilbereiche zugeführt, um die dreidimensionale Objektdarstellung für eine zweidimensionale Auswertung durch eine der Einrichtung 12 nachgeschaltete Einrichtung 14 zum zweidimensionalen Auswerten der Teilbereiche aufzubereiten.

Die Einrichtung 14 ist wirksam, um eine teilbereichsweise zweidimensionale Auswertung der dreidimensionalen Darstellung durchzuführen. In jedem Teilbereich der Mehrzahl von Teilbereichen werden die Daten des jeweiligen Teilbereichs untersucht, um Informationen über eine Stelle des Teilbereichs zu ermitteln, an der die Beschaffenheit des Objekts von einer vorgegebenen Beschaffenheit abweicht. Am Beispiel einer Dichteuntersuchung bedeutet dies, daß an der Stelle, die durch die Einrichtung 14 für einen Teilbereich ermittelt wird, die Dichte nach unten abweicht. Dies würde auf einen Lufteinschluß, eine Pore, oder aber auch auf eine konstruktive Struktur, wie z. B. eine Bohrung, hinweisen.

Eine Abweichung der Dichte nach oben kann dagegen ein Hinweis auf einen eingeschlossenen Fremdkörper, z. B. einen Eisenspan in Aluminium, sein.

Nachdem die Einrichtung 14 für alle Teilbereiche ihre Analyse durchgeführt hat, werden die erhaltenen Informationen über Stellen in den Teilbereichen mit abweichender Beschaffenheit einer Einrichtung 16 zugeführt. Die Einrichtung 16 ist ausgebildet, um eine dreidimensionale Zusammenhangsanalyse unter Verwendung der Daten über die Stellen aus den einzelnen Schichten durchzuführen. Die Zusammenhangsanalyse wird eine dreidimensionale Beschreibung einer dreidimensionalen Stelle liefern, deren Beschaffenheit von der vorgegebenen Beschaffenheit abweicht.

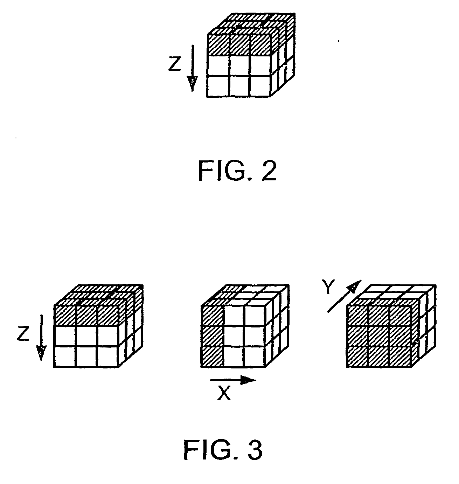

Abhängig von der Art der Daten der dreidimensionalen Darstellung des Objekts, die durch die Einrichtung 10 bereitgestellt werden, ist die Einrichtung 12 angeordnet, um die dreidimensionale Darstellung in Teilbereiche unterzugliedern. Liegt die dreidimensionale Darstellung als xyz-Darstellung vor, so ist die Einrichtung 12 vorzugsweise ausgebildet, um die dreidimensionale Darstellung in Schichten unterzugliedern. Dies ist anhand von Fig. 2 dargestellt. Lediglich aus Illustrationszwecken ist ein Würfel mit 27 Volumenelementen, die in der Technik auch als Voxel bezeichnet werden, dargestellt. Fig. 2 zeigt eine Untergliederung in Schichten entlang der z-Richtung, derart, daß jede Schicht als zweidimensionale Darstellung in der xy-Ebene betrachtet wird. Wie es aus Fig. 3 ersichtlich ist, sind jedoch auch Untergliederungen der dreidimensionalen Darstellung entlang der x-Richtung möglich und sinnvoll. Bei dieser Alternative liegen die Schichten als Schichten in der yz-Ebene vor. Schließlich kann die dreidimensionale Darstellung auch entlang der y-Richtung untergliedert werden, wobei dann zweidimensionale Schichten in der xz-Ebene vorhanden sind.

Ist die dreidimensionale Darstellung dagegen in einem Zylinderkoordinatensystem oder einem Kugelkoordinatensystem gegeben, so kann auch eine Schichtaufteilung entlang der dann vorliegenden Hauptkoordinaten Radius, Winkel und Höhe bzw. Radius, Azimutalwinkel und Elevationswinkel gewählt werden. Generell ist die Einrichtung 12 angeordnet, um die dreidimensionale Darstellung des Objekts in mehrere Teilbereiche unterzugliedern, die einer zweidimensionalen Auswertung bzw. Analyse zugänglich sind. Dieses Merkmal ist dahingehend von Vorteil, daß bekannte und leistungskräftige Bildverarbeitungsalgorithmen eingesetzt werden können, um eine schichtweise bzw. teilbereichsweise Analyse der dreidimensionalen Volumendaten des Objekts durchführen zu können.

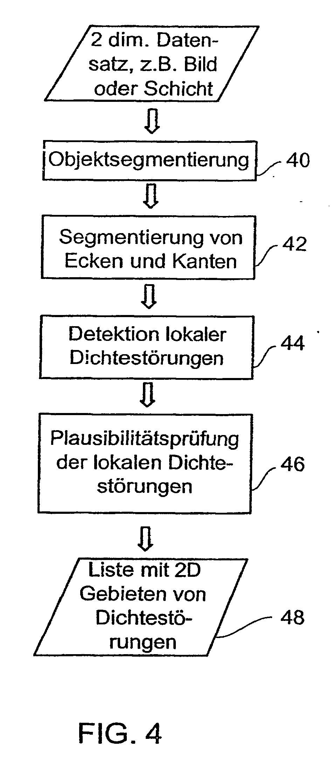

Das erfindungsgemäße Konzept, das anhand der Fig. 4 bis 6 detaillierter erläutert werden wird, ermöglicht somit eine möglichst schnelle Einflußnahme auf die einem Herstellungsprozeß zugrunde liegenden Prozeßparameter im Sinne einer Prozeßkontrolle bzw. Prozeßoptimierung. Die Ergebnisse der Auswertung sollen möglichst schnell eine Modifikation der Herstellungsparameter erlauben, um den Zeitbedarf der Prozeßeinstellung bzw. die Anzahl der fehlerhaft produzierten Teile zu minimieren. Daher wird erfindungsgemäß im Gegensatz zu bisherigen Verfahren die gesamte dreidimensionale Beschaffenheitsverteilung, z. B. Dichteverteilung, des Objekts in Betracht gezogen, ohne daß explizit geometrische (a priori) Informationen über das Objekt, welche möglicherweise als dreidimensionales CAD-Referenzmodell - lediglich für das fertige Endprodukt - vorliegen, verwendet werden.

Das erfindungsgemäße Konzept ermöglicht somit eine schnelle und automatische Überprüfung von Objekten, wie z. B. Guß- oder Spritzgußteilen, auf innere Herstellungsfehler wie Lunker, Materialinhomogenitäten oder Porositäten, ohne daß geometrische Informationen eines Referenzmodells des Bauteils, wie z. B. ein dreidimensionales CAD-Modell, benötigt werden.

Erfindungsgemäß können nunmehr Volumenrekonstruktionen von beispielsweise Aluminiumgußteilen automatisch und ohne Zuhilfenahme der geometrischen Informationen von Referenzmodellen auf innere Materialinhomogenitäten überprüft werden.

Dem erfindungsgemäßen Konzept können ferner auch, wenn vorhanden, geometrische Informationen, wie z. B. Materialparameter bzw. Dichte oder aber konstruktive Details hinsichtlich der zu erwartenden Größe von Bohrungen etc. zur Verfügung gestellt werden. In diesem Fall ist das erfindungsgemäße Konzept, ohne daß ein volles dreidimensionales Referenzmodell benötigt wird, in der Lage, auch konstruktive Merkmale eines Objekts zu vermessen und in fehlerhaft und nicht-fehlerhaft zu klassifizieren.

Insbesondere gegenüber der Verwendung eines dreidimensionalen Referenzmodells werden folgende Vorteile erreicht:
1. Da kein explizites Referenzmodell (z. B. CAD-Daten) verwendet wird, entfällt der Schritt der Registrierung. Dieser Schritt ist sehr zeitintensiv und verhindert eine vollautomatische Auswertung, da ein effektives allgemeingültiges Verfahren ohne interaktive Benutzereingriffe nicht existiert, v. a. bei Roh-(guss-) teilen mit Materialzugaben, die u. U. noch weiter verarbeitet werden müssen. Erst der Verzicht auf den Schritt der Registrierung (Berechnung der [relativen] Positionsabweichung von gemessenen Volumendaten zum geometrischen Referenzmodell [Transformationsmatrix]) ermöglicht eine vollautomatische Auswertung.
2. Bei dem erfindungsgemäßen Auswerteverfahren entfällt sowohl der Schritt der Oberflächenextraktion als auch der Registrierung. Dadurch kann ein wesentlicher Geschwindigkeitsgewinn erzielt werden, so daß die Auswertezeiten im Bereich der derzeit schnellsten CT-Anlagen liegen (ca. 5 Minuten für Aufnahme und Rekonstruktion für ein 512 x 512 x 400 Voxel großes Volumen). Damit wird erstmals eine seriennahe (voll-) automatische Auswertung von mittels Volumen-CT generierten Daten erreicht.
3. Gegenüber einer Auswertung mittels eines geometrischen Referenzmodells können wesentlich kleinere Materialinhomogenitäten bestimmt werden. Insbesondere können Porositätsnester lokalisiert werden, deren einzelne Poren kleiner als die Größe eines rekonstruierten Voxels (Volumenelement) sein können. Bei einer Auswertung unter Zuhilfenahme eines geometrischen Referenzmodells werden nämlich Abweichungen (Fehlerstrukturen) anhand eines Vergleiches der Oberfläche des Referenzmodells mit einer aus den rekonstruierten Objektvolumina extrahierten Bauteiloberfläche ermittelt. Etwaige Innenfehler müssen sich also durch einfache Schwellwertoperationen (Unterscheidung der Dichte von Material/Luft) ermitteln lassen. Dies kann erst ab einer bestimmten Fehlergröße (> ein Voxel) erfolgen. Das erfindungsgemäße Konzept ermittelt jedoch lokale Dichteabweichungen, und kann daher auch Fehlstellen detektieren, die sich nicht als Hohlraum in den rekonstruierten Volumina abzeichnen, sondern als Bereiche mit lokal geringfügig unter den Sollwerten liegenden Dichtewerten. Dies liegt z. B. dann vor, wenn sich im Bauteil Einzelporen befinden, deren Ausdehnung kleiner als die rekonstruierte Voxelgröße ist.

Wie es in Fig. 1 dargestellt ist, liefert die Einrichtung 10 eine dreidimensionale Darstellung des Objekts. Die dreidimensionale Darstellung sollte in einem echten dreidimensionalen (volumetrischen) Datenformat vorliegen, d. h. in einem Voxelvolumen oder Tensorfeld von Beschaffenheitswerten, wie z. B. Dichtewerten. Solche Daten können beispielsweise durch Methoden der Röntgen- oder Magnetresonanztomographie erzeugt werden.

Sämtliche anderen Datengenerierungsverfahren zur Erzeugung einer volumetrischen Darstellung, z. B. Ultraschall-Daten etc., können ebenfalls eingesetzt werden.

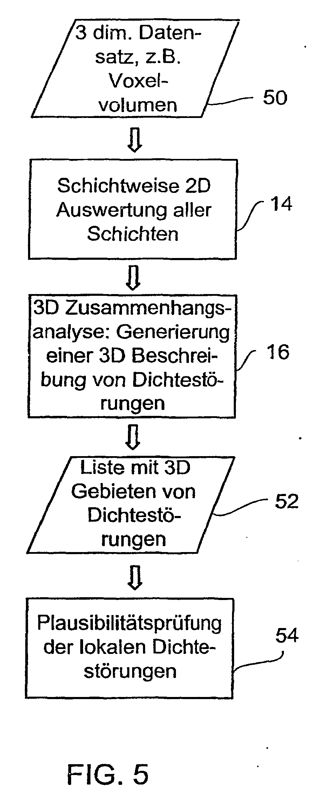

Im nachfolgenden wird anhand von Fig. 5 auf ein bevorzugtes Ausführungsbeispiel der vorliegenden Erfindung eingegangen. Der dreidimensionale Datensatz beispielsweise in Form eines Voxelvolumens 50 wird einer schichtweisen zweidimensionalen Auswertung aller Schichten 14 unterzogen. Daraufhin wird mittels der Einrichtung 16, wie es in Fig. 5 dargestellt ist, eine dreidimensionale Zusammenhangsanalyse erzeugt, wodurch eine dreidimensionale Beschreibung von Dichtestörungen, d. h. von Stellen des Objekts mit abweichender Beschaffenheit, generiert wird. Die dreidimensionale Zusammenhangsanalyse liefert eine Liste 52 mit dreidimensionalen Gebieten oder Stellen von Dichtestörungen bzw. von Beschaffenheitsabweichungen von einer vorgegebenen Beschaffenheit. Vorzugsweise wird dann, wie es in Fig. 5 dargestellt ist, eine Plausibilitätsprüfung 54 der enthaltenen dreidimensionalen Dichtestörungen durchgeführt.

Bevor detaillierter auf die in Fig. 5 gezeigten Funktionsblöcke eingegangen wird, wird zunächst auf Fig. 4 Bezug genommen, in der ein Beispiel für eine Ausgestaltung der Einrichtung 14 zum zweidimensionalen Auswerten der Teilbereiche bzw., im Falle einer orthogonalen Aufteilung, zweidimensionalen Schichten, durchgeführt wird. Die Einrichtung 14 benötigt als Eingangsinformationen einen zweidimensionalen Datensatz 40 als Bild oder Schicht. Hierauf wird bevorzugterweise das Prinzip des Background-Modelling eingesetzt, das in der Fachveröffentlichung von R. Hanke, U. Hassler, K. Heil: "Fast automatic X-ray image processing by means of a new multistage filter for background modelling", IEEE Int. Conf. on Image Processing ICIP, Austin, USA, 1994, beschrieben ist. Das bekannte Verfahren zur zweidimensionalen Analyse beschreibt die Anwendung von Bildverarbeitungsmethoden für eine radioskopische zweidimensionale Untersuchung von Aluminiumgußteilen. Bei diesem zweidimensionalen Verfahren wird kein Referenzmodell herangezogen, sondern es wird das Prinzip der Hintergrund-Modellierung eingesetzt.

Erfindungsgemäß wird zunächst eine Objektsegmentierung durchgeführt, d. h. die dreidimensionale Darstellung des zu untersuchenden Objekts wird in Segmente aufgeteilt, um festzustellen, ob in dem Segment Informationen über das Objekt oder Hintergrundinformationen oder Informationen über andere nicht zu untersuchende Objekte sind. Dann werden diejenigen Bildbereiche markiert, die zu dem untersuchenden Objekt gehören. Hierzu ist es sinnvoll, zumindest Informationen über das allgemeine Erscheinungsbild des Objekts zu haben. Dann kann das Segmentierungskonzept der Einrichtung 40 an die zu untersuchenden Volumendaten angepaßt werden. Generell sind jedoch Vorabinformationen nicht unbedingt erforderlich. Die Objektsegmentierung dient dazu, in einer unbekannten graphischen Darstellung grob zu lokalisieren, was überhaupt untersucht werden soll.

Diese Grobsuche ermöglicht es, bei der darauffolgenden Suche nach Materialinhomogenitäten nur die markierten Regionen bzw. Segmente zu untersuchen, wodurch eine Reduktion des zu untersuchenden Datenvolumens erreicht wird, was unmittelbar in einer Erhöhung der Auswertegeschwindigkeit resultiert.

In einem nächsten Schritt des bevorzugten Verfahrens werden die einzelnen Segmente genauer segmentiert, und zwar nach vorzugsweise äußeren Ecken und Kanten durch eine Einrichtung 42 zur Segmentierung von Ecken und Kanten. Dies wird dadurch erreicht, daß eine Signifikanzschwelle angelegt wird, wobei über der Signifikanzschwelle liegende Grauwertabweichungen, wobei Dichtewerte durch Grauwerte dargestellt sind, genauer untersucht werden, um auch bereits hier eventuell auftretende Pseudofehler zu eliminieren. Hierzu werden Ecken und Kanten durch Anwendung entsprechender Filter im Objektbereich detektiert und als solche markiert. Dies ermöglicht eine weitere Eingrenzung der Daten, die einer Einrichtung 44 zur Detektion lokaler Dichtestörungen zur Verfügung gestellt werden. Die Einrichtung 44 ist angeordnet, um mit geeigneten Filtern die zu untersuchende Schicht, und insbesondere noch die markierten Bereiche der Schicht auf lokale Dichtestörungen hin zu untersuchen. Hierbei können frei konfigurierbare Signifikanzschwellen für zu untersuchende Dichteabweichungen verwendet werden, so daß eine optimale Anpassung der Auswertung an ein zu prüfendes Bauteil gewährleistet wird. Um eine Anpassung zu erreichen, sollten bereits vorab Daten über das Bauteil existieren, um beispielsweise unterschiedliche Dichteschwellen für Gußteile einerseits bzw. Lötstellen etc. andererseits vorzusehen. Das erfindungsgemäße Verfahren ist jedoch auch ohne Vorabinformationen anwendbar, wobei hier Iterationsschritte vorgesehen sein könnten, um nach und nach zu eruieren, welche Beschaffenheiten bevorzugt auftreten. Die Bereitstellung von Vorabinformationen über zu erwartende Informationen verbessern jedoch die Effizienz und Genauigkeit des erfindungsgemäßen Verfahrens.

Die Einrichtung 44 ist ferner angeordnet, um jeder detektierten Stelle mit einer Beschaffenheitsabweichung eines oder mehrere Attribute zuzuordnen, wie z. B. Größe in Pixeln, Stärke, Informationen über die Umgebung der (zweidimensionalen) Stelle abweichender Beschaffenheit etc. Ein weiteres Attribut ist selbstverständlich die Position der Stelle, die entweder implizit oder explizit angegeben sein kann.

In einer anschließenden zweidimensionalen Plausibilitätsprüfung 46 der lokalen Dichtestörungen, d. h. der Stellen mit abweichender Beschaffenheit, können aus der Menge der gefundenen Dichtestörungen z. B. diejenigen bereits gelöscht werden, deren Attribute die Dichtestörung als konstruktives Merkmal des Objekts ausweist, wie z. B. als Ecke oder Kante. Am Ausgang der zweidimensionalen Datenanalyse wird eine Liste 48 mit zweidimensionalen Stellen von Dichtestörungen ausgegeben. Für die nachfolgende dreidimensionale Zusammenhangsanalyse (Einrichtung 16 in Fig. 1 und Fig. 5) ist bevorzugt, daß jede Stelle abweichender Beschaffenheit als Attribut ferner die Position in dem Volumen entweder absolut angegeben oder relativ zu einem Bezugspunkt des Objekts aufweist.

Die Einrichtung 14 zum zweidimensionalen Auswerten der Teilbereiche bewirkt somit eine Datentransformation dahingehend, daß eingangsseitig eine Schicht einer beliebigen dreidimensionalen Darstellung z. B. in Form von Pixeln vorliegt, und daß ausgangsseitig bei dem bevorzugten Ausführungsbeispiel der vorliegenden Erfindung keine Pixeldaten mehr vorliegen, sondern lediglich noch eine Liste mit den Stellen abweichender Beschaffenheit samt einer Vielzahl möglicher Attribute.

Die vorstehend beschriebene Auswertungsstrategie wird nun schichtweise auf das gemessene Objektvolumen angewendet. Nachdem alle Schichten des Objektvolumens durchlaufen wurden, liegen schichtweise die Informationen über Hintergrund, Objekt, Ecken, Kanten und insbesondere von Defekten im Objekt vor. Aus den einzelnen Schichten wird nunmehr mittels der Zusammenhangsanalyse eine dreidimensionale Charakterisierung des Objekts und der darin detektierten Fehler erzeugt, indem zusammenhängende Dichteabweichungen durch die einzelnen Schichten verfolgt und miteinander verknüpft werden. Dadurch wird eine echte dreidimensionale Beschreibung von Objektstrukturen, seien es Fehler oder konstruktive Merkmale, wie z. B. Bohrungen, erreicht. Den dreidimensionalen Dichtestörungen werden bevorzugterweise Merkmale bzw. Attribute zugeordnet, die das Volumen der dreidimensionalen Stelle, den Schwerpunkt, die Masse, Momente, Formfaktoren, Art und Ausdehnung von Nachbarschaften der dreidimensionalen Stellen etc. umfassen können. Mit Hilfe dieser Beschreibung kann dann mittels typischerweise vorgegebenen Prüfkriterien eine Aussage über die Qualität des zu kontrollierenden Objekts gemacht werden.

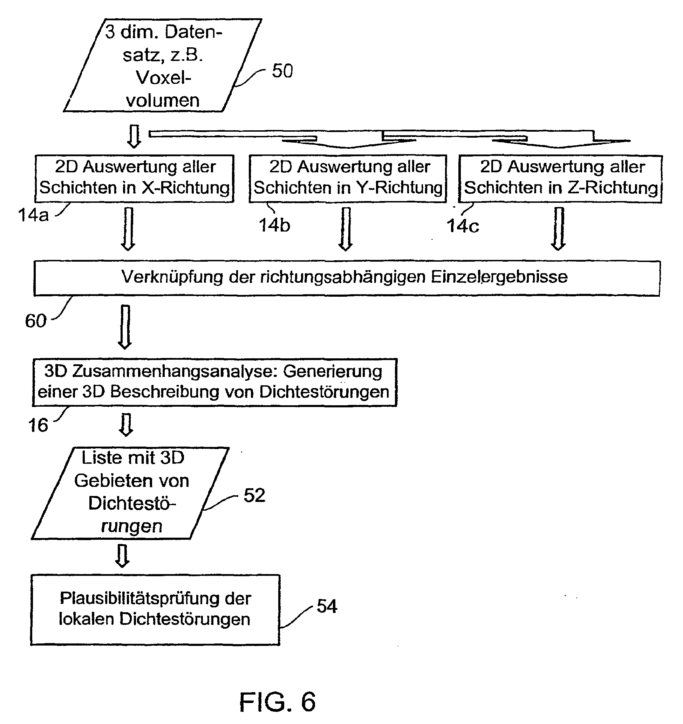

Im nachfolgenden wird anhand von Fig. 6 auf ein bevorzugtes Ausführungsbeispiel der vorliegenden Erfindung Bezug genommen, das eine wirkungsvolle Artefaktreduktion schafft. Im Gegensatz zu der in Fig. 2 gezeigten einfachen Untergliederung der dreidimensionalen Darstellung entlang einer Richtung wird, wie es in Fig. 3 gezeigt ist, eine mehrfache Untergliederung unter Verwendung von 2, 3 oder noch mehr Richtungen durchgeführt. Dann wird eine zweidimensionale Auswertung aller Schichten in den einzelnen Richtungen x, y und z durchgeführt (14a, 14b, 14c). Dadurch wird für jedes Volumenelement (Voxel) des Objekts nicht nur eine einzige Aussage erhalten, ob hier eine Beschaffenheitsabweichung vorliegt, sondern drei voneinander unabhängige Informationen erhalten. Durch eine Verknüpfung der richtungsabhängigen Einzelergebnisse ist es nunmehr möglich, voxelweise zu spezifizieren, ob hier tatsächlich eine abweichende Beschaffenheit vorliegt, oder ob ein Artefakt vorhanden war. Die Verknüpfung der richtungabhängigen Einzelergebnisse kann entweder logisch erfolgen, beispielsweise durch eine UND-Verknüpfung der in Fig. 6 gezeigten drei Ergebnisse. Alternativ könnte auch eine Mehrheitsentscheidung getroffen werden, d. h. falls zwei Blöcke 14a bis 14c auf eine Beschaffenheitsabweichung hindeuten, wird entschieden, daß hier eine Beschaffenheitsabweichung vorliegt. Wieder alternativ könnte als Verknüpfung der richtungsabhängigen Einzelergebnisse die Summe der drei Einzelergebnisse auf einer Grauskala genommen werden und dann mittels einer Schwelle entschieden werden, ob das Volumenelement eine abweichende Beschaffenheit hat oder nicht.

Insbesondere bei einer schichtweisen Auswertung von Computertomographie-Daten hat sich herausgestellt, daß sich in einem zweidimensionalen Schnitt des Computertomographie-Volumens im Bereich einer korrekten dreidimensionalen Struktur fehlerähnliche Grauwertstörungen ergeben können. Ein solcher Fall kann beispielsweise auch bei kleinen Bohrungen auftreten. Durch das in Fig. 6 gezeigte Ausführungsbeispiel wird daher die schichtweise Auswertung in drei orthogonal zueinander liegende Richtungen angewendet. Die Entscheidung, ob ein Volumenelement eine Fehlerstruktur beinhaltet, wird durch die Einrichtung 60 durch eines oder eine Kombination der beschriebenen Verfahren getroffen. Hiermit kann eine deutliche Artefaktreduzierung ermöglicht werden. Die Artefaktreduzierung ist insbesondere bei dem vorliegenden Verfahren von Bedeutung, da das Verfahren ohne Referenzdaten auskommen kann und automatisiert eingesetzt werden soll, so daß nicht auf eine Nachkontrolle einer Bedienperson vertraut werden muß.

Das in Fig. 6 gezeigte Ausführungsbeispiel ist insbesondere auch dann von Vorteil, wenn wie im Fall einer Computertomographie-Darstellung die Aufnahmedaten an sich aufgrund von Streuungen, Mehrfachreflexionen und Mehrfachausbreitungen relativ Artefakt-behaftet sind. In anderen Anwendungsfällen, bei denen günstigere dreidimensionale Daten vorliegen, oder in den Fällen, in denen die Computertomographie-Darstellung bereits einer unabhängigen Artefaktreduzierung unterzogen worden ist, dürfte eine zweidimensionale Auswertung in einer Richtung bereits genügen, wird jedoch selbstverständlich durch eine Auswertung in 2, 3 oder mehr Richtungen verbessert.

Es sei darauf hingewiesen, daß das erfindungsgemäße Konzept nicht nur zum Detektieren von fehlerhaften Strukturen verwendet werden kann, sondern auch zum Detektieren und Vermessen von Soll-Strukturen, wie z. B. Bohrungen. Aufgrund der Zusammenhangsanalyse und bei vorausgesetzter feiner schichtweisen Einteilung kann die Bohrung hinsichtlich ihrer Länge sehr genau vermessen werden. Das erfindungsgemäße Konzept erlaubt es ferner auch, ohne weiteres festzustellen, ob die Bohrung in einem bestimmten Toleranzbereich kreisrund ist oder "verzogen ist". Schließlich kann das erfindungsgemäße Verfahren bei Bereitstellung geeigneter Attribute über Nachbarbereiche feststellen, ob es sich hier um eine Bohrung handelt, nämlich dann, wenn die Nachbarbereiche zur Bohrung einen sehr hohen Dichtewert aufweisen, und wenn sich die Bohrung zu einem "Hintergrund" hin öffnet.

Auch ohne Bereitstellung geometrischer Referenzdaten über das Objekt an sich kann ein Werkstück auch hinsichtlich der konstruktiven Strukturen vermessen werden, wenn als Hilfsinformationen beispielsweise vorgegeben wird, daß nur Bohrungen mit einer bestimmten Größe innerhalb einer bestimmten Toleranz vorhanden sein dürfen. Das erfindungsgemäße Konzept wird dann die Liste der dreidimensionalen Stellen abweichender Beschaffenheit, die durch die dreidimensionale Zusammenhangsanalyse geliefert werden, durchsuchen, um zylindrische Strukturen, die auf eine Bohrung hindeuten, hinsichtlich ihrer Größe zu charakterisieren und mit den vorgegebenen Soll-Größen vergleichen.

Dasselbe trifft für den Fall zu, bei dem das Objekt aus zwei unterschiedlichen Materialien besteht, z. B. einem Aluminium-Deckel, einer Dichtung und einem weiteren Aluminium-Deckel. In diesem Fall können als Hilfsinformationen angegeben sein, daß lediglich zwei voneinander unterschiedliche Dichtewerte existieren, wobei ein Bereich mittlerer Dichte, der auf eine Gummidichtung hinweist, nach oben und unten von einem Bereich hoher Dichte, der das Aluminiumteil darstellt, umgeben sein muß. Unter Verwendung dieser Informationen kann beispielsweise festgestellt werden, ob eine Dichtung fehlerhaft ist, nämlich wenn in einem bestimmten Schnitt an keiner Stelle ein Bereich mit mittlerer Dichte auftritt.

Aus der vorstehenden Erörterung wird deutlich, daß durch Bereitstellen geeigneter Hilfsinformationen und entsprechender Berechnung geeigneter Attribute für die zweidimensionale Ergebnisliste bzw. dreidimensionale Ergebnisliste das erfindungsgemäße Konzept nicht nur zur Fehlerdetektion sondern auch zur Charakterisierung von Sollstrukturen eingesetzt werden kann.

## Patentansprüche

1. Vorrichtung zum Auswerten einer Beschaffenheit eines Objekts, mit folgenden Merkmalen:
einer Einrichtung (10) zum Bereitstellen einer dreidimensionalen Darstellung des Objekts, die Informationen über die auszuwertende Beschaffenheit umfaßt, in Form eines dreidimensionalen Datensatzes;
einer Einrichtung (12) zum Untergliedern der dreidimensionalen Darstellung in eine Mehrzahl von Teilbereichen, wobei ein Teilbereich eine Schicht ist und Volumenelemente umfaßt;
einer Einrichtung (14) zum teilbereichsweisen zweidimensionalen Auswerten der dreidimensionalen Darstellung durch Untersuchen jedes Teilbereichs der Mehrzahl von Teilbereichen, um Daten über eine oder mehrere zweidimensionale Stellen in dem Teilbereich zu ermitteln, an der bzw. denen die Beschaffenheit von einer vorgegebenen Beschaffenheit abweicht,; und
einer Einrichtung (16) zum Durchführen einer dreidimensionalen Zusammenhangsanalyse unter Verwendung der Daten über die Stellen durch Verfolgen zusammenhängender Stellen durch die einzelnen Teilbereiche und Verknüpfen der zusammenhängenden Stellen, um eine dreidimensionale Beschreibung von einer oder von mehreren dreidimensionalen Stellen zu erhalten, deren Beschaffenheiten von der vorgegebenen Beschaffenheit abweichen, **dadurch gekennzeichnet,**
**daß** die Einrichtung zum Untergliedern der dreidimensionalen Darstellung in Teilbereiche angeordnet ist, um eine Untergliederung in zumindest zwei unterschiedliche Richtungen durch die dreidimensionale Darstellung durchzuführen,
**daß** die Einrichtung (14a, 14b, 14c) zum zweidimensionalen Auswerten der Teilbereiche angeordnet ist, um die in unterschiedlichen Richtungen vorliegenden Teilbereiche zu untersuchen, derart, daß für jedes Volumenelement der dreidimensionalen Darstellung zumindest zwei getrennte Einzelinformationen über eine abweichende Beschaffenheit erhalten werden, und
**daß** der Einrichtung (16) zur dreidimensionalen Zusammenhangsanalyse eine Einrichtung (60) zum Verknüpfen der zumindest zwei Einzelinformationen, die pro Volumenelement vorliegen, vorgeschaltet ist, um durch Verknüpfen der Einzelinformationen zu spezifizieren, ob ein Volumenelement eine von der vorgegebenen Beschaffenheit abweichende Beschaffenheit oder ein Artefakt umfaßt.

2. Vorrichtung nach Anspruch 1, bei der die Einrichtung (12) zum Untergliedern angeordnet ist, um eine Untergliederung der dreidimensionalen Darstellung in eine Mehrzahl von Schichten zu schaffen.

3. Vorrichtung nach Anspruch 1 oder 2, bei der die Beschaffenheit die Dichte des Objekts ist.

4. Vorrichtung nach einem der vorhergehenden Ansprüche, bei der die Einrichtung (14) zum zweidimensionalen Auswerten der Teilbereiche folgende Teilmerkmale aufweist:
eine Einrichtung zum Erhalten eines Teilbereichs des Objekts samt Hintergrund;
eine Einrichtung (40) zum Segmentieren der zweidimensionalen Darstellung des Objekts samt Hintergrund in eine Mehrzahl von Segmenten;
eine Einrichtung zum Untersuchen der Segmente auf Beschaffenheitsabweichungen, um das Objekt von dem Hintergrund zu trennen; und
eine Einrichtung zum Markieren der Segmente mit Beschaffenheitsabweichungen,
wobei die Einrichtung zum zweidimensionalen Auswerten der Teilbereiche wirksam ist, um nur die markierten Segmente auszuwerten.

5. Vorrichtung nach einem der vorhergehenden Ansprüche, bei der die Einrichtung (14) zum teilbereichsweisen zweidimensionalen Auswerten angeordnet ist, um beim Untersuchen ein Filter zu verwenden, um eine Beschaffenheitsabweichung zu erfassen, die über einer vorbestimmten Signifikanzschwelle liegt.

6. Vorrichtung nach Anspruch 5, bei der eine über der Signifikanzschwelle liegende Beschaffenheitsabweichung ein Attribut umfaßt, das die geometrische Größe, die Stärke der Beschaffenheitsabweichung, Informationen über die Umgebung der Stelle und/oder geometrische Informationen umfaßt.

7. Vorrichtung nach Anspruch 6, bei der die Einrichtung (14) zum zweidimensionalen Auswerten angeordnet ist, um für jeden Teilbereich eine Beschaffenheitsliste zu generieren, in der Stellen mit abweichender Beschaffenheit samt deren Attribute aufgelistet sind.

8. Vorrichtung nach einem der vorhergehenden Ansprüche, bei der die dreidimensionale Darstellung des Objekts als Array von Volumenelementen vorliegt, und bei der jedem Volumenelement in einer Stelle mit abweichender Beschaffenheit ein Indikator zugeordnet ist, der Informationen über die abweichende Beschaffenheit der Stelle umfaßt.

9. Vorrichtung nach einem der vorhergehenden Ansprüche, bei der konstruktive Beschaffenheitsabweichungen und unbeabsichtigte Beschaffenheitsabweichungen vorhanden sind, und bei der die Einrichtung (16) zum Durchführen einer dreidimensionalen Zusammenhangsanalyse ausgangsseitig mit einer Einrichtung (54) zur Plausibilitätsprüfung verbunden ist, um eine konstruktive Beschaffenheitsabweichung von einer unbeabsichtigten Beschaffenheitsabweichung zu unterscheiden.

10. Vorrichtung nach einem der vorhergehenden Ansprüche, bei der eine dreidimensionale Beschreibung einer dreidimensionalen Stelle mit abweichender Beschaffenheit, die gegebenenfalls eine Mehrzahl von Volumenelementen umfaßt, ein Attribut umfaßt, das das Volumen, den Schwerpunkt, eine Masse, ein Moment, eine Art der Beschaffenheitsabweichung und Informationen über eine Nachbarschaft der Stelle umfaßt.

11. Vorrichtung nach einem der vorhergehenden Ansprüche,
bei der die Einrichtung zum Verknüpfen (60) angeordnet ist, um eine logische UND-Verknüpfung der Einzelinformationen, eine Mehrheitsentscheidung unter den Einzelinformationen und/oder eine Summation und Schwellenvergleichsoperation auszuführen.

12. Vorrichtung nach einem der vorhergehenden Ansprüche, bei der ferner eine Einrichtung (54) zur Plausibilitätsüberprüfung vorgesehen ist, um eine dreidimensionale Beschreibung einer dreidimensionalen Stelle mit abweichender Beschaffenheit zu beurteilen, wobei zur Beurteilung Zusatzinformationen über das Objekt verwendet werden, um konstruktive Beschaffenheitsabweichungen von unbeabsichtigten Beschaffenheitsabweichungen zu unterscheiden und/oder konstruktive Beschaffenheitsabweichungen in Hinblick auf die Zusatzinformationen zu beurteilen.

13. Vorrichtung nach Anspruch 11 oder 12,
bei der die Einrichtung (12) zum Untergliedern in Teilbereiche angeordnet ist, um eine als xyz-Volumen vorliegende dreidimensionale Darstellung in zweidimensionale Schichten entlang der x-Richtung, entlang der y-Richtung, und entlang der z-Richtung zu untergliedern.

14. Verfahren zum Auswerten einer Beschaffenheit eines Objekts, mit folgenden Schritten:
Bereitstellen (10) einer dreidimensionalen Darstellung des Objekts, die Informationen über die auszuwertende Beschaffenheit umfaßt, in Form eines dreidimensionalen Datensatzes;
Untergliedern (12) der dreidimensionalen Darstellung in eine Mehrzahl von Teilbereichen, wobei ein Teilbereich eine Schicht ist und Volumenelemente umfaßt;
teilbereichsweises zweidimensionales Auswerten (14) der dreidimensionalen Darstellung durch Untersuchen jedes Teilbereichs der Mehrzahl von Teilbereichen, um Daten über eine oder mehrere zweidimensionale Stellen in dem Teilbereich zu ermitteln, an der bzw. denen die Beschaffenheit von einer vorgegebenen Beschaffenheit abweicht; und
Durchführen (16) einer dreidimensionalen Zusammenhangsanalyse unter Verwendung der Daten über die Stellen für die einzelnen Teilbereiche durch Verfolgen zusammenhängender Stellen durch die einzelnen Teilbereiche und Verknüpfen der zusammenhängenden Stellen, um eine dreidimensionale Beschreibung von einer oder von mehreren dreidimensionalen Stellen zu erhalten, deren Beschaffenheiten von der vorgegebenen Beschaffenheit abweichen, **dadurch gekennzeichnet,**
**daß** im Schritt des Untergliederns der dreidimensionalen Darstellung in Teilbereiche eine Untergliederung in zumindest zwei unterschiedliche Richtungen durch die dreidimensionale Darstellung durchgeführt wird,
im Schritt des zweidimensionalen Auswertens der Teilbereiche die in unterschiedlichen Richtungen vorliegenden Teilbereiche untersucht werden, derart, daß für jedes Volumenelement der dreidimensionalen Darstellung zumindest zwei getrennte Einzelinformationen über eine abweichende Beschaffenheit erhalten werden, und
**daß** vor dem Schritt des Durchführens der dreidimensionalen Zusammenhangsanalyse der Schritt (60) des Verknüpfens der zumindest zwei Einzelinformationen, die pro Volumenelement vorliegen, durchgeführt wird, um durch Verknüpfen der Einzelinformationen zu spezifizieren, ob ein Volumenelement eine von der vorgegebenen Beschaffenheit abweichende Beschaffenheit oder ein Artefakt umfaßt.

## Claims

1. Apparatus for evaluating a state of an object, comprising:
means (10) for providing a three-dimensional representation of the object including information about the state to be evaluated in the form of a three-dimensional data set;
means (12) for subdividing the three-dimensional representation into a plurality of sub-areas, wherein a sub-area is a layer and includes volume elements;
means (14) for two-dimensionally evaluating, sub-area by sub-area, the three-dimensional representation by examining each sub-area of the plurality of sub-areas in order to ascertain data about one or more two-dimensional places in the sub-area at which the state deviates from a default state; and
means (16) for performing a three-dimensional connection analysis using the data about the places by tracking connected places through the individual sub-areas and linking the connected places, in order to obtain a three-dimensional description of one or more three-dimensional places the states of which deviate from the default state, **characterized in that**
the means for subdividing the three-dimensional representation into sub-areas is disposed to perform a subdivision in at least two different directions through the three-dimensional representation,
the means (14a, 14b, 14c) for two-dimensionally evaluating the sub-areas is disposed to examine the sub-areas present in different directions such that, for each volume element of the three-dimensional representation, at least two separate pieces of information about a deviating state are obtained, and
means (60) for linking the at least two pieces of information present per volume element precedes the means (16) for the three-dimensional connection analysis in order to specify, by linking the pieces of information, whether a volume element includes a state deviating from the default state or an artifact.

2. Apparatus of claim 1, wherein the means (12) for subdividing is disposed to provide a subdivision of the three-dimensional representation into a plurality of layers.

3. Apparatus of claim 1 or 2, wherein the state is the density of the object.

4. Apparatus of one of the preceding claims, wherein the means (14) for two-dimensionally evaluating the sub-areas comprises the following sub-features:
means for obtaining a sub-area of the object together with background;
means (40) for segmenting the two-dimensional representation of the object together with background into a plurality of segments;
means for examining the segments for deviations in state in order to separate the object from the background; and
means for marking the segments with deviations in state,
wherein the means for two-dimensionally evaluating the sub-areas operates to only evaluate the marked segments.

5. Apparatus of one of the preceding claims, wherein the means (14) for two-dimensionally evaluating sub-area by sub-area is disposed to use a filter in examining, in order to detect a deviation in state lying over a predetermined significance threshold.

6. Apparatus of claim 5, wherein a deviation in state lying above the significance threshold includes an attribute including the geometric size, the strength of the deviation in state, information about the surroundings of the place, and/or geometric information.

7. Apparatus of claim 6, wherein the means (14) for two-dimensionally evaluating is disposed to generate a state list for each sub-area, in which places with deviating state together with their attributes are listed.

8. Apparatus of one of the preceding claims, wherein the three-dimensional representation of the object is present as an array of volume elements, and wherein each volume element in a place with deviating state is associated with an indicator including information about the deviating state of the place.

9. Apparatus of one of the preceding claims, wherein constructive deviations in state and unintentional deviations in state are present, and wherein the means (16) for performing a three-dimensional connection analysis is connected on the output side to a means (54) for the plausibility check, in order to distinguish a constructive deviation in state from an unintentional deviation in state.

10. Apparatus of one of the preceding claims, wherein a three-dimensional description of a three-dimensional place with deviating state that includes a plurality of volume elements, if applicable, includes an attribute including the volume, the center of gravity, a mass, a moment, a kind of the deviation in state, and information about a neighborhood of the place.

11. Apparatus of one of the preceding claims,
wherein the means (60) for linking is disposed to perform a vertical ANDing of the pieces of information, a majority decision among pieces of information, and/or a summation and threshold comparison operation.

12. Apparatus of one of the preceding claims, wherein a means (54) for the plausibility check is further provided to assess a three-dimensional description of a three-dimensional place with deviating state, wherein additional information about the object is used for assessment to distinguish constructive deviations in state from unintentional deviations in state and/or assess constructive deviations in state regarding the additional information.

13. Apparatus of claim 11 or 12,
wherein the means (12) for subdividing into sub-areas is disposed to subdivide a three-dimensional representation present as xyz volume into two-dimensional layers along the x direction, along the y direction, and along the z direction.

14. Method of evaluating a state of an object, comprising:
providing (10) a three-dimensional representation of the object, which includes information about the state to be evaluated in the form of a three-dimensional data set;
subdividing (12) the three-dimensional representation into a plurality of sub-areas, wherein a sub-area is a layer and includes volume elements;
two-dimensionally evaluating (14), sub-area by sub-area, the three-dimensional representation by examining each sub-area of the plurality of sub-areas, in order to ascertain data about one or more two-dimensional places in the sub-area at which the state deviates from a default state; and
performing (16) a three-dimensional connection analysis using the data about the places for the individual sub-areas by tracking connected places through the individual sub-areas and linking the connected places, in order to obtain a three-dimensional description of one or more three-dimensional places the states of which deviate from the default state, **characterized in that**
in the step of subdividing the three-dimensional representation into sub-areas, a subdivision is performed in least two different directions through the three-dimensional representation,
in the step of two-dimensionally evaluating the sub-areas, the sub-areas present in different directions are examined such that, for each volume element of the three-dimensional representation, at least two separate pieces of information about a deviating state are obtained, and
before the step of conducting the three-dimensional connection analysis, the step (60) of linking the at least two pieces of information present per volume element is performed, in order to specify, by linking the pieces of information, whether a volume element includes a state deviating from the default state or an artifact.

## Revendications

1. Dispositif pour évaluer une qualité d'un objet, aux caractéristiques suivantes :
un dispositif (10) destiné à préparer une représentation tridimensionnelle de l'objet comportant des informations sur la qualité à évaluer, sous forme d'un ensemble de données tridimensionnelles ;
un dispositif (12) destiné à subdiviser la représentation tridimensionnelle en une pluralité de zones partielles, une zone partielle étant une couche et comportant des éléments de volume ;
un dispositif (14) destiné à évaluer de manière bidimensionnelle par zone partielle la représentation tridimensionnelle en examinant chaque zone partielle de la pluralité de zones partielles, pour déterminer des données sur un ou plusieurs endroits bidimensionnels dans la zone partielle auquel ou auxquels la qualité s'écarte d'une qualité prédéterminée ; et
un dispositif (16) destiné à effectuer une analyse de cohérence tridimensionnelle à l'aide des données sur les endroits en suivant les endroits cohérents dans les différentes zones partielles et en associant les endroits cohérents, pour obtenir une description tridimensionnelle d'un ou plusieurs endroits tridimensionnels dont les qualités s'écartent de la qualité prédéterminée, **caractérisé par le fait**
**que** le dispositif pour subdiviser la représentation tridimensionnelle en zones partielles est disposé de manière à effectuer une subdivision en au moins deux directions différentes dans la représentation tridimensionnelle,
**que** le dispositif (14a, 14b, 14c) destiné à évaluer de manière bidimensionnelle les zones partielles est disposé de manière à examiner les zones partielles présentes dans des directions différentes, de sorte qu'il soit obtenu, pour chaque élément de volume de la représentation tridimensionnelle, au moins deux informations individuelles séparées sur une qualité qui s'écarte, et
**qu'**avant le dispositif (16) destiné à l'analyse de cohérence tridimensionnelle est connecté un dispositif (60) destiné à associer les au moins deux informations individuelles présentes par élément de volume, pour spécifier, en associant les informations individuelles, si un élément de volume comporte une qualité s'écartant de la qualité prédéterminée ou un artifice.

2. Dispositif selon la revendication 1, dans lequel le dispositif (12) destiné à subdiviser est disposé de manière à créer une subdivision de la représentation en une pluralité de couches.

3. Dispositif selon la revendication 1 ou 2, dans lequel la qualité est la densité de l'objet.

4. Dispositif selon l'une des revendications précédentes, dans lequel le dispositif (14) destiné à évaluer de manière bidimensionnelle les zones partielles présente les caractéristiques partielles suivantes :
un dispositif destiné à obtenir une zone partielle de l'objet, y compris l'arrière-plan ;
un dispositif (40) destiné à segmenter la représentation bidimensionnelle de l'objet, y compris l'arrière-plan, en une pluralité de segments ;
un dispositif destiné à examiner les segments quant à des écarts de qualité, pour séparer l'objet de l'arrière-plan ; et
un dispositif destiné à marquer les segments à écarts de qualité,
le dispositif destiné à évaluer de manière bidimensionnelle les zones partielles est actif pour n'évaluer que les segments marqués.

5. Dispositif selon l'une des revendications précédentes, dans lequel le dispositif (14) destiné à évaluer de manière bidimensionnelle par zone partielle est disposé de manière à utiliser, lors de l'examen, un filtre pour détecter un écart de qualité qui se situe au-dessus d'un seuil d'importance prédéterminé.

6. Dispositif selon la revendication 5, dans lequel un écart de qualité qui se situe au-dessus d'un seuil d'importance comporte un attribut qui comporte la grandeur géométrique, l'intensité de l'écart de qualité, des informations sur l'environnement de l'endroit et/ou des informations géométriques.

7. Dispositif selon la revendication 6, dans lequel le dispositif (14) destiné à évaluer de manière bidimensionnelle est disposé de manière à générer, pour chaque zone partielle, une liste de qualité dans laquelle sont repris des endroits à qualité qui s'écarte, y compris leurs attributs.

8. Dispositif selon l'une des revendications précédentes, dans lequel la représentation tridimensionnelle de l'objet est présente sous forme de rangée d'éléments de volume, et dans lequel est associé à chaque élément de volume à un endroit à qualité qui s'écarte un indicateur qui comporte des informations sur la qualité qui s'écarte de l'endroit.

9. Dispositif selon l'une des revendications précédentes, dans lequel sont présents des écarts de qualité constructifs et des écarts de qualité involontaires, et dans lequel le dispositif (16) destiné à effectuer une analyse de cohérence tridimensionnelle est relié, du côté de la sortie, à un dispositif (54) destiné à vérifier la plausibilité, pour distinguer un écart de qualité constructif d'un écart de qualité involontaire.

10. Dispositif selon l'une des revendications précédentes, dans lequel une description tridimensionnelle d'un endroit tridimensionnel à qualité qui s'écarte, comportant éventuellement une pluralité d'éléments de volume, comporte un attribut comprenant le volume, la gravité, une masse, un moment, un type de l'écart de qualité et des informations sur une proximité de l'endroit.

11. Dispositif selon l'une des revendications précédentes,
dans lequel le dispositif destiné à associer (60) est disposé de manière à réaliser une association ET logique des informations individuelles, une décision majoritaire parmi les informations individuelles et/ou une sommation et une opération de comparaison de seuil.

12. Dispositif selon l'une des revendications précédentes, dans lequel est prévu, par ailleurs, un dispositif (54) destiné à vérifier la plausibilité, pour apprécier une description tridimensionnelle d'un endroit tridimensionnel à qualité qui s'écarte, pour l'appréciation étant utilisées des informations supplémentaires sur l'objet, pour distinguer des écarts de qualité constructifs d'écarts de qualité involontaires et/ou pour apprécier les écarts de qualité constructifs par rapport aux informations supplémentaires.

13. Dispositif selon la revendication 11 ou 12,
dans lequel le dispositif (12) destiné à subdiviser en zones partielles est disposé de manière à subdiviser une représentation tridimensionnelle présente sous forme de volume xyz en couches bidimensionnelles selon la direction x, selon la direction y, et selon la direction z.

14. Procédé pour évaluer une qualité d'un objet, aux étapes suivantes consistant à :
préparer (10) une représentation tridimensionnelle de l'objet comportant des informations sur la qualité à évaluer, sous forme d'un ensemble de données tridimensionnelles ;
subdiviser (12) la représentation tridimensionnelle en une pluralité de zones partielles, une zone partielle étant une couche et comportant des éléments de volume ;
évaluer (14) de manière bidimensionnelle par zone partielle la représentation tridimensionnelle en examinant chaque zone partielle de la pluralité de zones partielles, pour déterminer des données sur un ou plusieurs endroits bidimensionnels dans la zone partielle auquel ou auxquels la qualité s'écarte d'une qualité prédéterminée ; et
effectuer (16) une analyse de cohérence tridimensionnelle à l'aide des données sur les endroits pour les zones partielles individuelles en suivant les endroits cohérents dans les différentes zones partielles et en associant les endroits cohérents, pour obtenir une description tridimensionnelle d'un ou plusieurs endroits tridimensionnels dont les qualités d'écartent de la qualité prédéterminée, **caractérisé par le fait**
**qu'**à l'étape consistant à subdiviser la représentation tridimensionnelle en zones partielles est effectuée une subdivision en au moins deux directions différentes dans la représentation tridimensionnelle,
**qu'**à l'étape consistant à évaluer de manière bidimensionnelle les zones partielles sont examinées les zones partielles présentes dans des directions différentes, de sorte qu'il soit obtenu, pour chaque élément de volume de la représentation tridimensionnelle, au moins deux informations individuelles séparées sur une qualité qui s'écarte, et
**qu'**avant l'étape consistant à effectuer l'analyse de cohérence tridimensionnelle est réalisée l'étape (60) consistant à associer les au moins deux informations individuelles présentes par élément de volume, pour spécifier, en associant les informations individuelles, si un élément de volume comporte une qualité s'écartant de la qualité prédéterminée ou un artifice.
